# EUROPEAN PATENT SPECIFICATION

(11) **EP 3 809 284 B1**
(45) Date of publication and mention of the grant of the patent: **06.09.2023**
(21) Application number: 20200271.3
(22) Date of filing: 06.10.2020
(51) Int. Cl.: G06F 16/958

(54) **SYSTEM AND METHOD FOR LOAD MITIGATION IN REQUEST HANDLING**
SYSTEM UND VERFAHREN ZUR LASTVERRINGERUNG BEI DER ANFRAGEHANDHABUNG
SYSTÈME ET PROCÉDÉ DE RÉDUCTION DE CHARGE DANS LE TRAITEMENT DE REQUÊTES

(30) Priority: 18.10.2019 FR 1911664; 18.10.2019 US 201916656821
(43) Date of publication of application: 21.04.2021
(73) Proprietor: Amadeus S.A.S., 06410 Biot (FR)
(72) Inventor: LANDRA, Corinne Francoise Pascale, 06410 Biot - Sophia Antipolis (FR); AMADIEU, Olivier, 06410 Biot - Sophia Antipolis (FR); PREZET, Herve, 06410 Biot - Sophia Antipolis (FR); BIGNOTTI, Catherine, 06410 Biot - Sophia Antipolis (FR)
(74) Representative: Samson & Partner Patentanwälte mbB

(56) References cited:
- WO-A1-2016/210344
- US-A1- 2014 172 840
- CASANDRA VENERA PIETREANU: "Analysis of traditional Global Distribution Systems vs. New Distribution Capability", INCAS BULLETIN, vol. 11, no. 2, 11 June 2019 (2019-06-11), pages 239-247, XP055701523, Romania ISSN: 2066-8201, DOI: 10.13111/2066-8201.2019.11.2.20

## Description

### Field

The specification relates generally to handling data requests in computing systems, and specifically to a system and method for load mitigation in such request handling.

### Background

Certain requests for generated or computed data, as opposed to existing data that need only be retrieved, occur in great numbers (e.g. tens of thousands per second), and are handled by a comparatively small number of computing systems. Examples of such requests are requests for available travel-related products and services (e.g. flights, hotel rooms and the like; flights are particularly vulnerable), directed to the computing systems of providers of such products. Responding directly to such requests by the providers' computing systems imposes substantial computational loads and associated costs. However, reducing those impacts by relying on a third party to respond to the requests based on data published to the third party periodically by the providers may decrease the accuracy of the responses,

US 2014/172840 relates to augmenting Web search results with relevant content received from third party applications. A plurality of third party applications are registered with a search extension service. When a search request is received, it is communicated to all third party applications that have been registered for an entity type contained in the request. As a result, the third party applications return the results to the search extender service which renders and presents them on a results page.

### Summary

The invention is defined by the independent claims.

In some examples, generating the adjusted reply by adjusting the intermediate reply based on the instructions comprises adjusting one or more of:
a price of the one or more items indicated by the data; and
services associated with the one or more items indicated by the data.

In some examples, wherein the generating the intermediate reply is based on data defining rules for generating a baseline offer corresponding to the one or more items, the data including at least one of (i) information electronically published by the provider system and (ii) information provided from the provider system to the intermediation server.

In some examples, the instructions received from the hosted offer management system represent rules of the provider system for adjusting information, electronically published by the provider system that represent a baseline offer for the one or more items, to generate an offer for the one or more items.

In some examples, the request comprises a shopping request.

The method further comprises:
after providing the adjusted reply to the requesting device, receiving, at the intermediation server, from the requesting device, a second request for auxiliary content associated with the one or more items;
communicating with the provider system to receive an auxiliary reply containing the auxiliary content associated with the one or more items, the auxiliary reply generated via the provider system communicating with the hosted offer management system; and
providing, from the intermediation server, to the requesting device, the auxiliary reply in response to the second request.

In some examples the method further comprises, at the intermediation server:
retrieving a provider profile and determining whether the request is eligible for direct distribution based on the provider profile.

Another aspect of the specification provides an intermediation server for handling data requests in a computing system, the intermediation server comprising: a communications interface; and a processor connected with the communications interface, the processor configured to: receive from a requesting device via the communications interface, a request for one or more items provided by a provider system; generate an intermediate reply comprising data indicative of the one or more items provided by the provider system; determine whether the request is eligible for direct distribution; in response to a determination that the request is eligible for direct distribution: communicate with a hosted offer management system to receive instructions for adjusting the intermediate reply, the hosted offer management system providing hosted provider object services for the provider system; and adjust the intermediate reply based on the instructions to generate an adjusted reply; and provide to the requesting device via the communications interface, the adjusted reply in response to the request.

In some examples, the processor is configured, in order to generate the adjusted reply, to adjust one or more of:
a price of the one or more items indicated by the data; and
services associated with the one or more items indicated by the data.

In some examples, the processor is configured, in order to generate the intermediate reply, to retrieve data defining rules for generation of a baseline offer corresponding to the one or more items, the data including at least one of (i) information electronically published by the provider system and (ii) information provided from the provider system to the intermediation server.

In some examples, wherein the instructions received from the hosted offer management system represent rules of the provider system for adjusting information, electronically published by the provider system that represent a baseline offer for the one or more items, to generate an offer for the one or more items.

In some examples, the request comprises a shopping request.

In some examples, the processor is further configured to:
after provision of the adjusted reply to the requesting device, receive, from the requesting device, a second request for auxiliary content associated with the one or more items;
communicate with the provider system to receive an auxiliary reply containing the auxiliary content associated with the one or more items, the auxiliary reply generated via the provider system communicating with the hosted offer management system; and
provide, to the requesting device, the auxiliary reply in response to the second request.

In some examples, the processor is further configured to: retrieve a provider profile and determine whether the request is eligible for direct distribution based on the provider profile.

A further aspect of the specification provides a computer program product for handling data requests in a computing system, the computer program product comprising program code instructions stored on a computer-readable medium comprising computer readable program means for receiving from a requesting device via a communications interface of the intermediation server, a request for one or more items provided by a provider system; computer readable program means for generating an intermediate reply comprising data indicative of the one or more items provided by the provider system; computer readable program means for determining whether the request is eligible for direct distribution; computer readable program means for in response to a determination that the request is eligible for direct distribution: communicating with a hosted offer management system to receive instructions for adjusting the intermediate reply, the hosted offer management system providing hosted provider object services for the provider system; and adjusting the intermediate reply based on the instructions to generate an adjusted reply; and computer readable program means for providing to the requesting device via the communications interface, the adjusted reply in response to the request, when said program runs on a computer.

Embodiments are described with reference to the following figures, in which:
Fig. 1 depicts a system for request handling;
Fig. 2 depicts certain components of the intermediation server and a provider system of FIG. 1;
Fig. 3 depicts a method of request handling in the system of FIG. 1;
Fig. 4 depicts an example performance of blocks 305 and 310 of the method of FIG. 3;
Fig. 5 depicts an example performance of blocks 315 and 320 of the method of FIG. 3;
Fig. 6 depicts an example performance of block 325 of the method of FIG. 3;
Fig. 7 depicts an example performance of block 330 of the method of FIG. 3; and
Fig. 8 depicts an example performance of blocks 335 to 350 of the method of FIG. 3.

### Detailed description

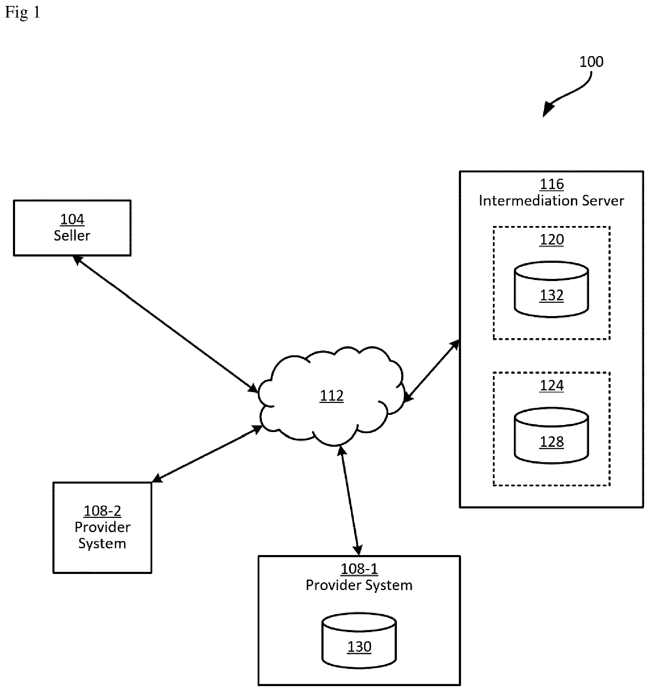

FIG. 1 depicts a system 100 for handling data requests. In general, handling data requests in this context refers to the receipt of a request, and the processing of that request (typically by consulting one or more other sources of data) to generate a response to provide to the computing device that originated the request.

More specifically, in the illustrated example the requests discussed herein are generated by a requesting device 104 (a single requesting device 104 is shown, but the system 100 can include any number requesting devices 104). The requests, in the examples discussed below, are requests for information describing travel-related products and services, such as flights, hotel reservations, vehicle rentals, and the like (generally referred to as items). The requesting device 104 can be a direct consumer of such products and services (e.g. an individual traveler), or an intermediate such as a travel agent. In the present example, the requesting device is assumed to be operated by a travel agency (e.g. an online travel agency, OTA), and is therefore also referred to as a seller 104 (because the seller 104 retrieves information about the above-mentioned products and services, to sell to the consumer).

The requests originated by the seller 104 include various options and attributes defining desired characteristics of the products and services to be returned to the seller 104. Examples of such attributes include times and dates, origin and destination locations, and the like. The response(s) to such requests include data defining products or services that satisfy the above-mentioned attributes. The response data, which may be referred to as shopping recommendations, of fers or the like, depends at least in part on product and service characteristics generated by providers, such as airlines or the like. Each provider may operate a provider system. Two example provider systems 108-1 and 108-2 are shown in FIG. 1 (collectively referred to as provider systems 108 and generically referred to as a provider system 108). Each provider system 108 includes one or more computing devices that implement various processes enabling the computation and presentation of shopping recommendations, as well as the delivery of the products and services to customers.

In previous arrangements, responses are not generated at the provider systems 108 themselves. Instead, the above-mentioned provider data (e.g. schedules, fares, distribution rules for the fares, and the like) is published by the provider systems 108 to third party repositories. Requests from the seller 104 are directed, via a network 112 (i.e. any suitable combination of local-area and widearea networks, including the Internet) are directed to such third parties, whether directly from the seller 104 or via one or more intermediate systems. Responses are therefore not generated by the provider systems 108. Instead, the provider systems 108 are contacted only when a purchase of a product or service is initiated (e.g. from among a number of possible products and services from one or more providers sent to the seller 104 in a response).

The above third-party publishing model, however, limits the ability of providers 108 to apply dynamic adjustments to product and service characteristics (e.g. price), in response to specific request attributes. The above limitations can arise, for example, from the frequency of publishing, which may not be sufficiently frequent to accommodate a desired frequency of changes to dynamic adjustment rules. In some operational models, therefore, such as the model contemplated in the New Distribution Capability (NDC) standard, provider systems 108 are direct recipients of requests. That is, rather than publishing product and service data to third parties (independently of any particular request), for computation of responses by the third party itself or another system, the provider systems 108 may store product and service data locally, receive requests directly from the seller 104, and compute responses to the requests.

Although the arrangement in which the provider systems 108 are directly responsible for responding to data requests from sellers 104 enables the provider systems 108 to exert finer-grained control over the generation of responses, it also requires that the provider systems 108 process a significantly greater number of requests than in the previously discussed model. Further, a large majority of those requests do not lead to purchases, and substantial infrastructural costs may therefore be incurred by the provider systems 108.

The system 100 therefore includes certain additional features to enable the processing of requests from the seller 104 in a manner that provides the granularity mentioned above in connection with the NDC-based model, while limiting the computational load on the provider systems 108 that is typically imposed by providing such granularity.

Specifically, the system 100 includes an intermediation server 116 (also simply referred to herein as the server 116) that includes a request handler 120 and a hosted offer management subsystem (OMS) 124. Although the OMS 124 is shown in FIG. 1 as being implemented at the server 116, in other examples the OMS 124 can be implemented in a separate computing device (or collection of linked computing devices) in communication with the server 116. As will be discussed below, the OMS 124 is hosted at the server 116 on behalf of the provider 108-1; in other embodiments, the OMS 124 can be deployed at the provider 108-1 itself, instead of at the server 116 on the provider's behalf.

The OMS 124 hosts a repository 128, which may be implemented as any suitable number of repositories (which may also be implemented as distinct but intercommunicating subsystems), containing data employed in responding to requests from the seller 104. For example, the repository 128 can contain the schedules and fares mentioned earlier. The OMS 124 can also contain, in addition to or instead of some or all provider data, instructions for retrieving provider data from other sources (not shown) and rules for generating baseline responses to requests. Still further, the OMS 124 can contain rules for generating adjustments to baseline responses under certain conditions.

Examples of such adjustments can include dynamic adjustments to pricing data, addition of ancillary products and services (i.e. beyond those explicitly requested in the request from the seller 104), and the like. Information employed to perform such adjustments may be generally referred to as auxiliary data (i.e. beyond the data employed to generate baseline replies to requests). The provider system 108 itself may also include, for example in a repository 130, auxiliary data that is not stored at the OMS 124. The auxiliary data in the repository 130 may include, for example, additional rules for pricing or service adjustments, multimedia content, or the like. In other examples, the repository 130 can be omitted (i.e. all data employed in response generation can be hosted at the OMS 124).

The data in the repository 128 is deployed to the OMS 124 by at least one of the providers 108. For example, the provider 108-1 is assumed to have deployed data to the OMS 124; that is, the server 116 hosts offer management services for the provider 108-1, rather than the OMS 124 being deployed at the provider 108-1. In other embodiments, the OMS 124 is implemented within the provider 108-1, rather than hosted at the server 116. The request handler 120 includes a provider profile repository 132 containing indications, for at least one of the providers 108, of request attributes for which a hosted provider 108 (i.e. the provider 108-1 in this example) is capable of responding to requests via a direct distribution channel such as NDC, and. For requests that are eligible for direct distribution, the provider 108 has typically, but not necessarily, deployed auxiliary data to the OMS 124. Requests that are eligible for direct distribution may therefore also be eligible for auxiliary content. In other words, the profile repository 132 contains indications that enable the request handler 120 to determine which incoming requests are eligible for direct processing by the OMS 124 to generate auxiliary content, such as the above-mentioned dynamic pricing.

As will be discussed in greater detail below, requests from the seller 104 are directed not to the provider systems 108, but to the server 116. The request handler 120 processes each request by comparing the request to the profile repository 132 to determine whether the request is eligible for direct distribution, e.g. via the NDC channel as noted above, and therefore whether the request may also be eligible for auxiliary content from each provider system 108. When the request is eligible, the request handler 120 marks any response data corresponding to that provider system 108 as direct distribution-eligible, which causes the seller 104 to direct subsequent requests directly to the relevant provider system 108. In addition, the request handler 120, when the request is eligible for direct distribution from a given provider system 108 (and may therefore also be eligible for auxiliary content), can also generate adjustments to baseline response data before responding to the request. That is, the request handler 120 can communicate with the OMS 124 not only to generate baseline response data, but also to generate adjusted response data, providing at least a degree of additional granularity to the response without imposing the computational load of response generation on the provider system 108.

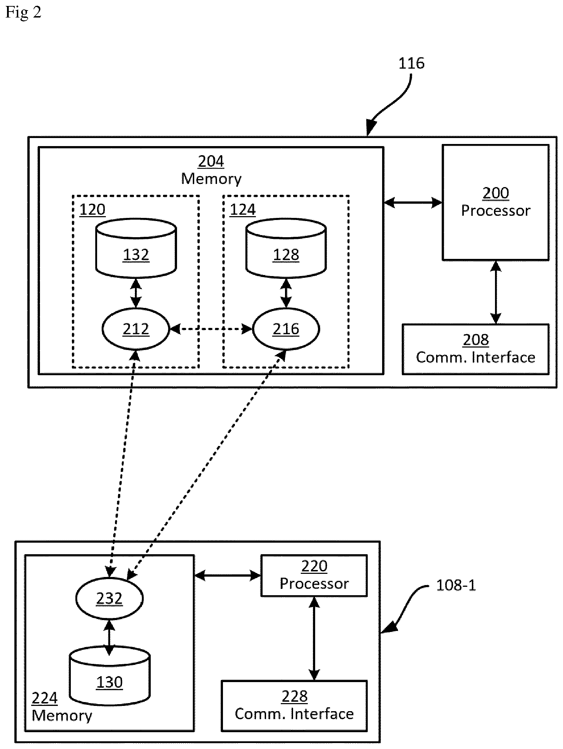

Before further discussion of the functionality of the various components of the system 100, certain internal components of the provider system 108-1 and the intermediation server 116 will be described in connection with FIG. 2.

Turning to FIG. 2, the intermediation server 116 includes at least one processor 200, such as a central processing unit (CPU) or the like. The processor 200 is interconnected with a memory 204, implemented as a suitable non-transitory computer-readable medium (e.g. a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 200 and the memory 204 are generally comprised of one or more integrated circuits (ICs).

The processor 200 is also interconnected with a communication interface 208, which enables the server 116 to communicate with the other computing devices of the system 100 via the network 112. The communication interface 208 therefore includes any necessary components (e.g. network interface controllers (NICs), radio units, and the like) to communicate via the network 112. The specific components of the communication interface 208 are selected based on the nature of the network 112. The server 116 can also include input and output devices connected to the processor 200, such as keyboards, mice, displays, and the like (not shown).

The components of the server 116 mentioned above can be deployed in a single enclosure, or in a distributed format. In some examples, therefore, the server 116 includes a plurality of processors, either sharing the memory 204 and communication interface 208, or each having distinct associated memories and communication interfaces.

The memory 204 stores data defining the request handler 120 and the OMS 124 as shown in FIG. 1. In particular, the memory 204 stores the repositories 128 and 132, as well as a plurality of computer-readable programming instructions, executable by the processor 200, in the form of various applications. The applications include a request handling application 212 (also referred to herein simply as the application 212) and an offer generation application 216 (also referred to herein simply as the application 216). As will be understood by those skilled in the art, the processor 200 executes the instructions of the applications 212 and 216 (and any other suitable applications) in order to perform various actions defined by the instructions contained therein. In the description below, the processor 200, and more generally the server 116, are said to be configured to perform those actions. It will be understood that they are so configured via the execution (by the processor 200) of the instructions of the applications stored in memory 204.

As also illustrated in FIG. 2, the provider system 108-1 includes at least one processor 220, such as a CPU or the like. The processor 220 is interconnected with a memory 224, implemented as a suitable non-transitory computer-readable medium (e.g. a suitable combination of non-volatile and volatile memory subsystems). The processor 220 and the memory 224 are generally comprised of one or more ICs. The processor 220 is also interconnected with a communication interface 228, which enables the provider system 108-1 to communicate with the other computing devices of the system 100 via the network 112.

The memory 224 stores the repository 130, as well as an application 232 executable by the processor 220 to interact with the server 116 to process requests from the seller 104. In particular, as shown in FIG. 2, both the request handler 120 (as implemented by the application 212) and the application 232 are configured to communicate with the OMS 124 (as implemented by the application 216). In addition, the request handler 120 directs a subset of the incoming requests from the seller 104 to the application 232 for processing (but, of particular note, not all requests from the seller 104). As noted above, in other examples the OMS 124 can be deployed at the provider 108-1 rather than hosted at the server 116. In such examples, the OMS 124 (i.e. the application 216 and the repository 128) are located in the memory 224 rather than at the memory 204 of the server 116.

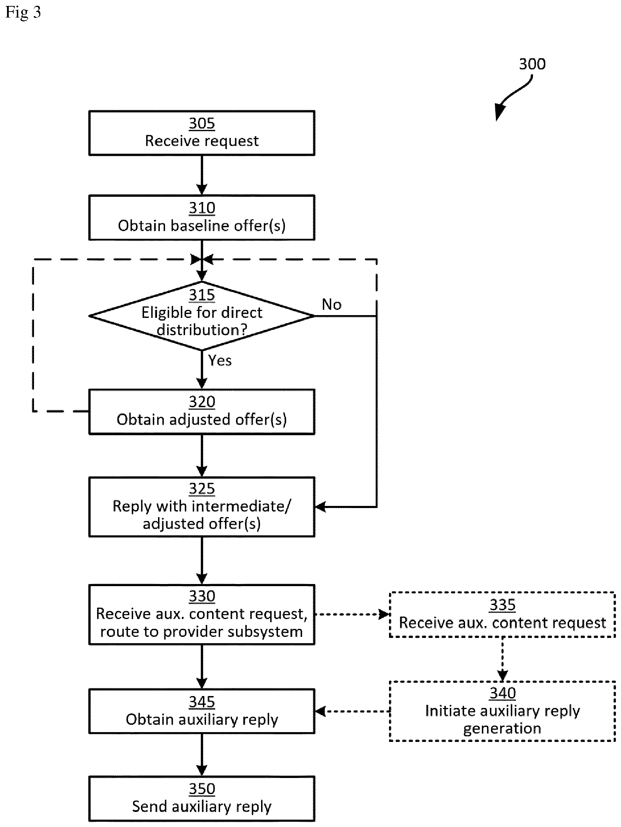

Turning now to FIG. 3, certain aspects of the operation of the system 100 will be described in greater detail. Specifically, FIG. 3 illustrates a method 300 of processing requests from the seller 104 while mitigating computational load on the provider systems 108. The method 300 will be described in conjunction with its performance within the system 100. In particular, certain blocks of the method 300 are performed at the server 116 via the execution of the applications 212 and 216 by the processor 200. Other blocks are performed by the provider system 108-1, via the execution of the application 232 by the processor 220.

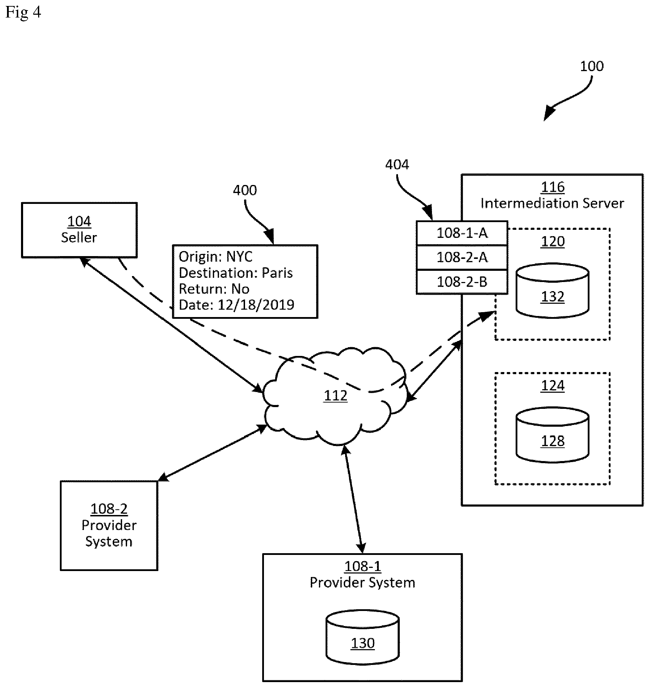

At block 305, the request handler 120 receives a request from the seller 104 via the network 112. The request can be transmitted to the request handler 120 via any suitable interface (e.g. an API exposed by the server 116 or the like). The request includes request attributes that, as mentioned earlier, define desired characteristics of products and services to be returned to the seller 104. Turning briefly to FIG. 4, an example request 400 is shown. The request 400, which may be referred to as a shopping request, includes origin, destination, and date attributes for flights, as well as an indication that a return flight is not requested (i.e. the request 400 is for one-way flights).

Returning to FIG. 3, at block 310, having received the request 400, the request handler 120 obtains baseline offers corresponding to the request 400. The baseline offers, which may also be referred to as intermediate offers, are obtained by the request handler 120 by retrieving data from either or both of the OMS 124 and external sources (e.g. of information published by the provider systems 108 to third party repositories). For example, the request handler 120 can transmit a request to the OMS 124 for records (for any provider system 108 represented in the OMS 124) representing items matching the attributes of the request 400. The request handler 120 may also retrieve rules from the OMS 124 corresponding to the provider systems 108 and controlling access to the above records (e.g. defining that the seller 104 must have a particular geographic location in order to receive a response including a given item that has the requested attributes).

Referring again to FIG. 4, a set 404 of three example baseline offers are shown. For example, the baseline offer 108-1-A represents a flight offered by the operator of the provider system 108-1, and the baseline offers 108-2-A and 108-2-B represent flights offered by the operator of the provider system 108-2. The baseline offers 404 are defined, for example, by dates and times, as well as prices.

Having generated the baseline offers 404, the request handler 120 does not yet return the baseline offers 404 to the seller 104. Instead, returning to FIG. 3, the request handler 120 determines, at block 315, whether the request is eligible for direct distribution (and therefore may be eligible for auxiliary content) from any providers represented in the profile repository 132 (typically, providers represented in the repository 132 are those for whom provider data is hosted in the OMS 124). For example, the request handler 120 can retrieve records from the repository 132 corresponding to any provider represented in the set 404 of baseline offers. In the present example, it is assumed that the repository 132 contains records for both the provider systems 108-1 and 108-2, as shown below in Table 1.

### Example Profile Repository 132

**[Table 1]**

| **Provider** | **NDC-capable?** | **Criteria** |
|---|---|---|
| 108-1 | Yes | Origin = NYC |
| 108-2 | No | N/A |

As seen above, the repository 132 indicates that the provider system 108-2 is not NDC-capable (or, more generally, does not support direct distribution or provide auxiliary content). The provider system 108-1, however, does support direct distribution and therefore can be contacted via a direct distribution channel to handle the request, including by providing auxiliary content. However, the provider system 108-1 provides auxiliary content only for requests satisfying certain criteria. In this example, the provider system 108-1 has deployed auxiliary content to the OMS 124 for application to any request with an origin location of New York City. Because the request 400 matches the origin indicated in Table 1, the determination at block 315 for the provider system 108-1 is affirmative. A wide variety of other criteria may also be defined in the repository 132. Another example of such a criterion is a point-of-sale criterion, specifying one or more geographic regions to be compared with the geographic location of the seller 104. If the seller 104 has a location matching the above criteria, then the request is eligible for auxiliary content.

Following an affirmative determination at block 315, at block 320 the request handler 120 obtains an adjusted offer. Specifically, in the present example, the request handler obtains adjustments to the offer 108-1-A shown in FIG. 4. The mechanism by which the adjusted offer is obtained, in the present example, includes transmitting the baseline offer 108-1-A to the OMS 124 along with a request for auxiliary content. The OMS 124 processes the request, e.g. to determine whether to supplement the baseline offer 108-1-A with ancillary services, whether to adjust the price of the baseline offer 108-1-A, or the like. The OMS 124 can perform these determinations and return the results thereof to the request handler 120, or the OMS 124 can return rules and source data for making the determinations to the request handler 120, and the request handler 120 itself can determine whether any adjustments apply.

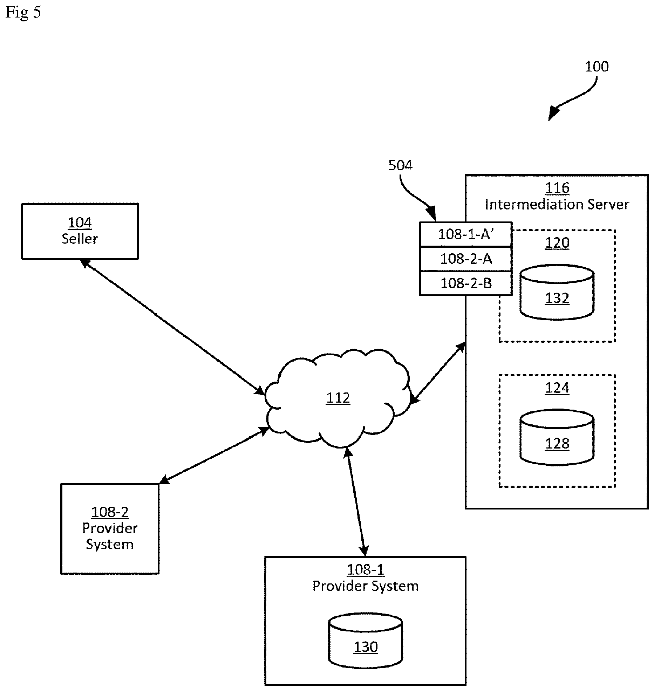

The request handler 120 repeats the determination at block 315, and if applicable the performance of block 320, for each provider 108 represented in the set 404 of baseline offers (as indicated by the dashed lines from blocks 315 and 320). In the present example, as will be apparent from Table 1, the determination at block 315 for the provider system 108-2 is negative. Therefore, block 320 is not performed for the baseline offers 108-2-A and 108-2-B. Turning to FIG. 5, an adjusted set of offers 504 is shown, in which the baseline offer 108-1-A has been replaced with an adjusted offer 108-1-A'. For example, the adjusted offer 108-1-A' may include a discounted price relative to the baseline offer 108-1-A. The baseline offers 108-2-A and 108-2-B are unchanged.

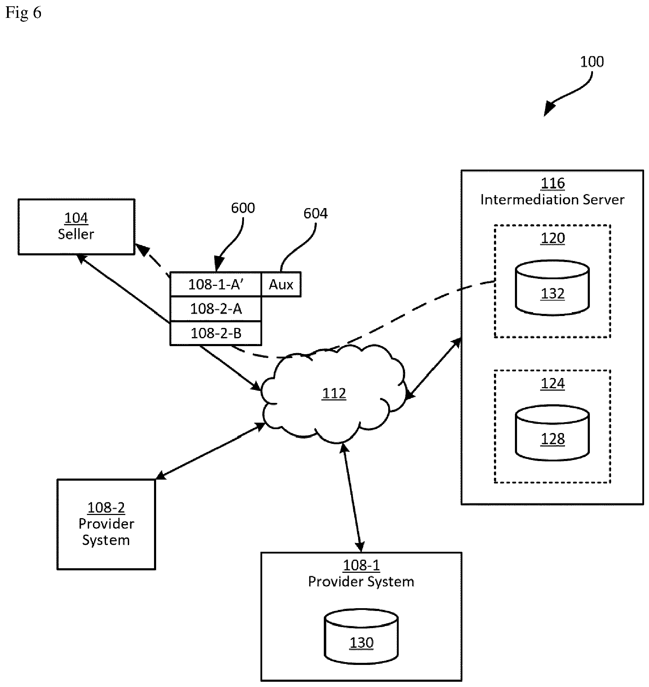

At block 325, the request handler 120 sends a reply to the seller 104, containing the intermediate and/or adjusted offers resulting from the performance(s) of blocks 310, 315 and 320. In the present example, therefore, the set 504 of offers is transmitted to the seller 104 at block 325. In addition, any adjusted of fers are marked in the response as being eligible for auxiliary content. For example, as shown in FIG. 6, a response 600 is transmitted to the seller 104 that includes the offers from FIG. 5, and a flag 604 associated with the adjusted offer 108-1-A'. The flag 604 can be a string of text, a graphic identifier, or a combination thereof, that indicates to the seller 104 not only that the adjusted offer 108-1-A' has been adjusted, but also that the adjusted offer 108-1-A' may be eligible for further adjustment, for example, via an NDC interaction with the provider system 108-1 itself.

The seller 104 is configured, responsive to receiving the offers sent by the request handler 120 at block 325, to present the offers (e.g. on a display or other suitable output assembly). The seller 104 is configured to receive selections of one or more offers to obtain further details and/or initiate a purchase of the items defined by the selected offers. For offers that are not eligible for auxiliary content, subsequent processing can be performed, for example, by transmitting a booking request to the request handler from the seller 104.

Subsequent processing for offers that are eligible for auxiliary content, however, is performed beginning at block 330. In particular, at block 330, assuming that the seller 104 has received a selection of an adjusted offer (i.e. an offer that is eligible for auxiliary content), the request handler 120 receives an auxiliary content request. The auxiliary content request may be distinguished from the initial shopping request by data structure or any other suitable mechanism. For example, the seller 104 can be configured to transmit the request received at block 330 formatted according to the NDC standard (e.g. as an OfferPrice request). The request for auxiliary content received at block 330 can include the content of the original offer (i.e. the adjusted offer sent at block 325). In some examples, the request received at block 330 includes, in addition to or instead of the actual offer content, an identifier of the offer content that is also stored in the OMS 124.

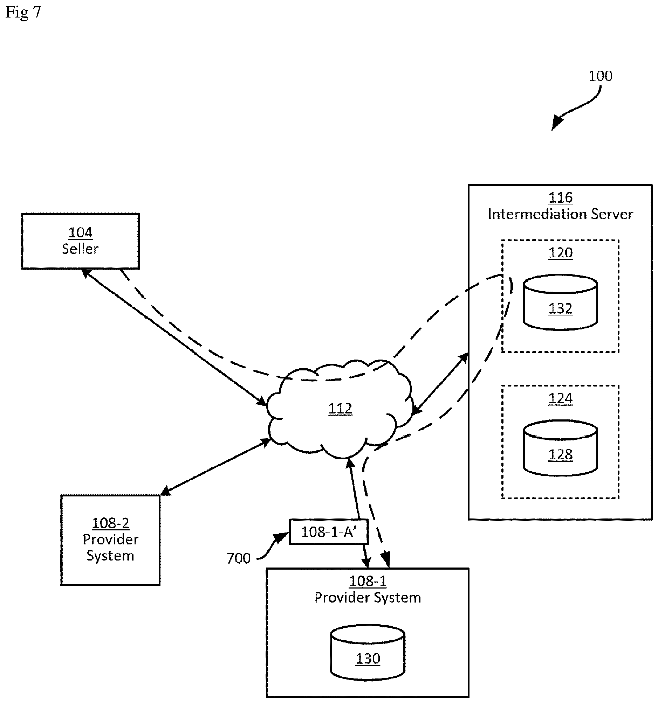

When the request handler 120 receives the auxiliary content request, the request is routed to the relevant provider system 108 for processing. FIG. 7 illustrates the receipt of a request 700 at the request handler 120, followed by routing of the request 700 to the provider system 108-1. The provider system 108-1, in turn, is configured to receive the auxiliary content request 700 (as shown in dashed lines at block 335 of FIG. 3), and to initiate the generation of an auxiliary reply (as shown at block 340 of FIG. 3).

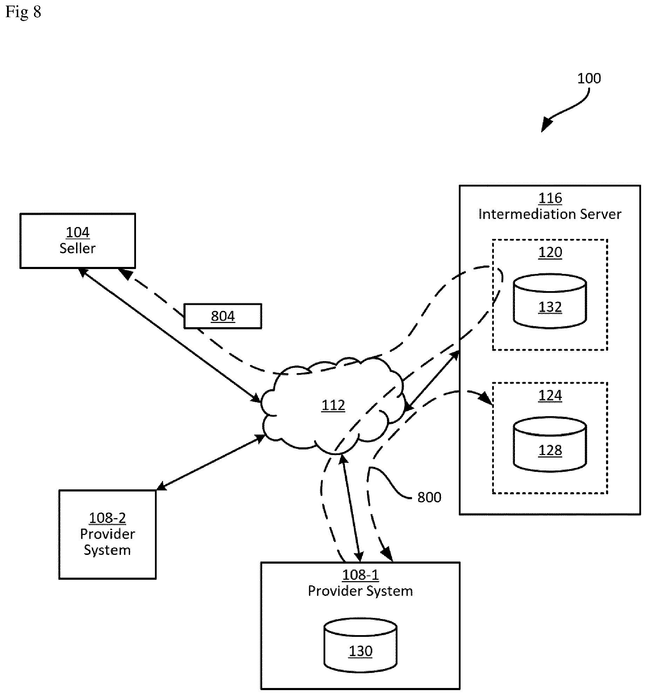

The provider system 108-1, to generate the auxiliary reply, can retrieve content from the repository 130, and can also request data from the OMS 124. FIG. 8, or example, illustrates an exchange 800 between the provider system 108-1 and the OMS 124. That is, the OMS 124 is employed by both the request handler 120 to generate baseline offers (independently of the provider systems 108) and the provider system 108-1 to generate auxiliary replies for offers that have been selected for further processing at the seller 104.

The auxiliary reply can include, for example, a further adjusted price, additional ancillary services (i.e. beyond those mentioned earlier), or the like. The provider system 108-1, having generated the auxiliary reply, returns the auxiliary reply to the request handler 120. In other words, the request handler 120 obtains the auxiliary reply at block 345. At block 350, the request handler 120 transmits the auxiliary reply to the seller 104. FIG. 8 illustrates an auxiliary reply 804 being transmitted to the seller 104 via the request handler 120. The auxiliary reply 804 can be transmitted according to the same data structure as the auxiliary content request 700 (e.g. formatted according to the NDC standard, as an OfferPrice reply).

As will now be apparent, additional processing of the auxiliary reply, e.g. to finalize a purchase of the item(s) defined therein, can be performed between the seller 104 and the provider system 108-1, with the request handler 120 simply routing communications between the seller 104 and the provider system 108-1.

As will be understood from the discussion above, the system 100 enables the application of granularity to certain seller requests, while minimizing the number of requests that are processed by the provider system 108-1 itself. In particular, the shared use of the OMS 124 by the request handler 120 and the provider system 108-1 enables the generation of baseline and adjusted offers that reflect at least a degree of the desired granularity, without any direct involvement by the provider system 108-1. The provider system 108-1 is required to process requests directly only responsive to second requests (i.e. auxiliary content requests), which are less numerous that shopping requests such as the request 400, and which are also more likely to indicate an impending booking.

Those skilled in the art will appreciate that in some embodiments, the functionality of any of the applications 212, 216 and 232 may be implemented using pre-programmed hardware or firmware elements (e.g., application specific integrated circuits (ASICs), electrically erasable programmable read-only memories (EEPROMs), etc.), or other related components.

## Claims

1. A method of handling data requests in a computing system comprising:
receiving, at an intermediation server, from a requesting device, a request (305) for one
or more items provided by a provider system;
generating, at the intermediation server, an intermediate reply comprising data indicative of the one or more items provided by the provider system,
wherein the intermediate reply is obtained by a request handler of the intermediation server by retrieving data from either or both of a hosted offer management system and external sources;
determining, at the intermediation server, whether the request is eligible for direct distributior (315) ;
in response to determining that the request is eligible for direct distribution, generating, at the intermediation server, an adjusted reply (320) by:
- communicating with the hosted offer management system to receive instructions for adjusting the intermediate reply, the hosted offer management system providing hosted provider object services for the provider system; and
- adjusting, at the intermediation server, the intermediate reply based on the instructions; and
providing, from the intermediation server, to the requesting device, the adjusted reply (325) in response to the request,
wherein the method further comprises:
after providing the adjusted reply to the requesting device, receiving, at the intermediation server, from the requesting device, a second request for auxiliary content (330) associated with the one or more items;
communicating with the provider system to receive an auxiliary reply (345) containing the auxiliary content associated with the one or more items, the auxiliary reply generated via the provider system communicating with the hosted offer management system, wherein when the request is eligible for direct distribution and the provider system supports direct distribution, the provider system is contacted directly via a direct distribution channel to handle the request, wherein handling the request includes providing the auxiliary content; and
providing, from the intermediation server, to the requesting device, the auxiliary reply (350) in response to the second request.

2. The method of claim 1, wherein the generating the adjusted reply by adjusting the intermediate reply based on the instructions comprises adjusting one or more of:
a price of the one or more items indicated by the data; and
services associated with the one or more items indicated by the data.

3. The method of claim 1 or claim 2, wherein the generating the intermediate reply is based on data defining rules for generating a baseline offer corresponding to the one or more items, the data including at least one of (i) information electronically published by the provider system and (ii) information provided from the provider system to the intermediation server.

4. The method of any one of claims 1 to 3, wherein the instructions received from the hosted offer management system represent rules of the provider system for adjusting information, electronically published by the provider system that represent a baseline offer for the one or more items, to generate an offer for the one or more items.

5. The method of any one of claims 1 to 4, wherein the request comprises a shopping request.

6. The method of any one of claims 1 to 5, further comprising, at the intermediation server: retrieving a provider profile and determining whether the request is eligible for direct distribution based on the provider profile.

7. An intermediation server for handling data requests in a computing system, the intermediation server comprising:
a communications interface;
a processor connected with the communications interface, the processor configured to:
receive from a requesting device via the communications interface, a request (305) for
one or more items provided by a provider system;
generate an intermediate reply comprising data indicative of the one or more items provided by the provider system;
wherein the intermediate reply is obtained by a request handler of the intermediation server by retrieving data from either or both of a hosted offer management system and external sources,
determine whether the request is eligible for direct distribution (315);
in response to a determination that the request is eligible for direct in distribution, generating, at the intermediation server, an adjusted reply (320) by:
- communicate with the hosted offer management system to receive instructions for adjusting the intermediate reply, the hosted offer management system providing hosted provider object services for the provider system; and
- adjust the intermediate reply based on the instructions to generate an adjusted reply; and
provide to the requesting device via the communications interface, the adjusted reply (325) in response to the request,
wherein the processor is further configured to:
after providing the adjusted reply to the requesting device, receive, at the intermediation server, from the requesting device, a second request for auxiliary content (330) associated with the one or more items;
communicate with the provider system to receive an auxiliary reply (345) containing
the auxiliary content associated with the one or more items, the auxiliary reply generated via the provider system communicating with the hosted offer management system, wherein when the request is eligible for direct distribution and the provider system supports direct distribution, the provider system is contacted directly via a direct distribution channel to handle the request, wherein handling the request includes providing the auxiliary content; and
provide, from the intermediation server, to the requesting device, the auxiliary reply (350) in response to the second request.

8. The intermediation server of claim 7, wherein the processor is configured, in order to generate the adjusted reply, to adjust one or more of:
a price of the one or more items indicated by the data; and
services associated with the one or more items indicated by the data.

9. The intermediation server of claim 7 or claim 8, wherein the processor is configured, in order to generate the intermediate reply, to retrieve data defining rules for generation of a baseline offer corresponding to the one or more items, the data including at least one of (i) information electronically published by the provider system and (ii) information provided from the provider system to the intermediation server.

10. The intermediation server of any one of claims 7 to 9, wherein the instructions received from the hosted offer management system represent rules of the provider system for adjusting information, electronically published by the provider system that represent a baseline offer for the one or more items, to generate an offer for the one or more items.

11. The intermediation server of any one of claims 7 to 10, wherein the request comprises a shopping request.

12. The intermediation server of any one of claims 7 to 11, wherein the processor is further configured to:
after provision of the adjusted reply to the requesting device, receive, from the requesting device, a second request for auxiliary content associated with the one or more items;
communicate with the provider system to receive an auxiliary reply containing the auxiliary content associated with the one or more items, the auxiliary reply generated via the provider system communicating with the hosted offer management system; and
provide, to the requesting device, the auxiliary reply in response to the second request.

13. The intermediation server of any one of claims 7 to 12, wherein the processor is further configured to: retrieve a provider profile and determine whether the request is eligible for direct distribution based on the provider profile.

14. A computer program product for handling data requests in a computing system, the program product comprising program code instructions stored on a computer-readable medium comprising:
computer readable program means for receiving from a requesting device via a communications interface of the intermediation server, a request (305) for one or more items provided by a provider system;
computer readable program means for generating an intermediate reply comprising data indicative of the one or more items provided by the provider system,
wherein the intermediate reply is obtained by a request handler of the intermediation server by retrieving data from either or both of a hosted offer management system and external sources,
computer readable program means for determining whether the request is eligible for direct distribution (315);
computer readable program means for in response to a determination that the
request is eligible for direct distribution, generating, at the intermediation server, an adjusted reply (320) by:
- communicating with a hosted offer management system to receive instructions for adjusting the intermediate reply, the hosted offer management system providing hosted provider object services for the provider system; and
- adjusting the intermediate reply based on the instructions to generate an adjusted reply; and
computer readable program means for providing to the requesting device via the communications interface, the adjusted reply (325) in response to the request,
wherein the program product further comprises program code instructions stored on a computer-readable medium comprising:
computer readable program means for after providing the adjusted reply to the requesting device, receiving, at the intermediation server, from the requesting device, a second request for auxiliary content (330) associated with the one or more items;
computer readable program means for communicating with the provider system to receive an auxiliary reply (345) containing the auxiliary content associated with the one or more items, the auxiliary reply generated via the provider system communicating with the hosted offer management system, wherein when the request is eligible for direct distribution and the provider system supports direct distribution, the provider system is contacted directly via a direct distribution channel to handle the request, wherein handling the request includes providing the auxiliary content; and
computer readable program means for providing, from the intermediation server, to the requesting device, the auxiliary reply (350) in response to the second request, when said program runs on a computer.

## Patentansprüche

1. Verfahren zum Bearbeiten von Datenanfragen in einem Datenverarbeitungssystem, Folgendes umfassend:
Empfangen, an einem Vermittlungsserver und von einer anfragenden Vorrichtung, einer Anfrage (305) für einen oder mehrere Posten, die von einem Anbietersystem bereitgestellt werden;
Erzeugen, am Vermittlungsserver, einer Zwischenantwort, die Daten umfasst, die den einen oder die mehreren Posten repräsentieren, die von dem Anbietersystem bereitgestellt werden,
wobei die Zwischenantwort durch eine Anfragebearbeitungseinheit des Vermittlungsservers erhalten wird, indem Daten entweder von einem gehosteten Angebotsmanagementsystem oder externen Quellen oder von beidem abgerufen werden;
Feststellen, am Vermittlungsserver, ob die Anfrage für eine direkte Auslieferung (315) geeignet ist;
in Reaktion auf die Feststellung, dass die Anfrage für eine direkte Auslieferung geeignet ist, Erzeugen, am Vermittlungsserver, einer angepassten Antwort (320) durch Folgendes:
- Kommunizieren mit dem gehosteten Angebotsmanagementsystem, um Anweisungen zum Anpassen der Zwischenantwort zu empfangen, wobei das gehostete Angebotsmanagementsystem gehostete Anbieterobjektdienste für das Anbietersystem bereitstellt; und
- Anpassen, am Vermittlungsserver, der Zwischenantwort basierend auf den Anweisungen; und
Bereitstellen, durch den Vermittlungsserver an die anfragende Vorrichtung, der angepassten Antwort (325) in Reaktion auf die Anfrage,
wobei das Verfahren außerdem Folgendes umfasst:
Empfangen, von der anfragenden Vorrichtung am Vermittlungsserver und nach dem Bereitstellen der angepassten Antwort an die anfragende Vorrichtung, einer zweiten Anfrage für zusätzlichen Inhalt (330), der mit dem einen oder den mehreren Posten verbunden ist;
Kommunizieren mit dem Anbietersystem, um eine zusätzliche Antwort zu erhalten (345), die den zusätzlichen Inhalt enthält, der mit dem einen oder den mehreren Posten verbunden ist, wobei die zusätzliche Antwort dadurch erzeugt wird, dass das Anbietersystem mit dem gehosteten Angebotsmanagementsystem kommuniziert, und wobei gilt, dass wenn die Anfrage für eine direkte Auslieferung geeignet ist und das Anbietersystem eine direkte Auslieferung unterstützt, das Anbietersystem direkt über einen direkten Auslieferungskanal kontaktiert wird, um die Anfrage zu bearbeiten, wobei die Bearbeitung der Anfrage das Bereitstellen des zusätzlichen Inhalts umfasst; und
Bereitstellen, vom Vermittlungsserver an die anfragende Vorrichtung, der zusätzlichen Antwort (350) in Reaktion auf die zweite Anfrage.

2. Verfahren nach Anspruch 1, wobei das Erzeugen der angepassten Antwort durch das Anpassen der Zwischenantwort basierend auf den Anweisungen das Anpassen eines oder mehrerer der folgenden Punkte umfasst:
ein Preis für den einen oder die mehreren Posten, die durch die Daten repräsentiert werden; und
Dienste, die mit dem einen oder den mehreren Posten, die durch die Daten repräsentiert werden, verbunden sind.

3. Verfahren nach Anspruch 1 oder Anspruch 2, wobei das Erzeugen der Zwischenantwort auf Daten basiert, die Regeln für das Erzeugen eines Grundangebots definieren, das dem einen oder den mehreren Posten zugeordnet ist, wobei die Daten wenigstens eines der Folgenden umfassen: (i) Information, die vom Anbietersystem elektronisch veröffentlicht wird, und (ii) Information, die vom Anbietersystem an den Vermittlungsserver bereitgestellt wird.

4. Verfahren nach einem der Ansprüche 1 bis 3, wobei die vom gehosteten Angebotsmanagementsystem empfangenen Anweisungen Regeln des Anbietersystems repräsentieren, um Information anzupassen, die vom Anbietersystem elektronisch veröffentlicht wird und ein Grundangebot für den einen oder die mehreren Posten repräsentiert, um ein Angebot für den einen oder die mehreren Posten zu erzeugen.

5. Verfahren nach einem der Ansprüche 1 bis 4, wobei die Anfrage eine Einkaufsanfrage umfasst.

6. Verfahren nach einem der Ansprüche 1 bis 5, das außerdem am Vermittlungsserver Folgendes umfasst: Abrufen eines Anbieterprofils und Feststellen, basierend auf dem Anbieterprofil, ob die Anfrage für eine direkte Auslieferung geeignet ist.

7. Vermittlungsserver zum Bearbeiten von Datenanfragen in einem Datenverarbeitungssystem, wobei der Vermittlungsserver Folgendes umfasst:
eine Kommunikationsschnittstelle;
einen Prozessor, der mit der Kommunikationsschnittstelle verbunden ist, wobei der Prozessor für Folgendes eingerichtet ist:
Empfangen, von einer anfragenden Vorrichtung und über die Kommunikationsschnittstelle, einer Anfrage (305) für einen oder mehrere Posten, die von einem Anbietersystem bereitgestellt werden;
Erzeugen einer Zwischenantwort, die Daten umfasst, die den einen oder die mehreren Posten repräsentieren, die vom Anbietersystem bereitgestellt werden;
wobei die Zwischenantwort durch eine Anfragebearbeitungseinheit des Vermittlungsservers erhalten wird, indem Daten entweder von einem gehosteten Angebotsmanagementsystem oder externen Quellen oder von beidem abgerufen werden;
Feststellen, ob die Anfrage für eine direkte Auslieferung (315) geeignet ist;
in Reaktion auf die Feststellung, dass die Anfrage für eine direkte Auslieferung geeignet ist, Erzeugen, am Vermittlungsserver, einer angepassten Antwort (320) durch Folgendes:
- Kommunizieren mit dem gehosteten Angebotsmanagementsystem, um Anweisungen zum Anpassen der Zwischenantwort zu empfangen, wobei das gehostete Angebotsmanagementsystem gehostete Anbieterobjektdienste für das Anbietersystem bereitstellt; und
- Anpassen der Zwischenantwort basierend auf den Anweisungen, um eine angepasste Antwort zu erzeugen; und
Bereitstellen, an die anfragende Vorrichtung und über die Kommunikationsschnittstelle, der angepassten Antwort (325) in Reaktion auf die Anfrage,
wobei der Prozessor außerdem für Folgendes eingerichtet ist:
Empfangen, von der anfragenden Vorrichtung am Vermittlungsserver und nach dem Bereitstellen der angepassten Antwort an die anfragende Vorrichtung, einer zweiten Anfrage für zusätzlichen Inhalt (330), der mit dem einen oder den mehreren Posten verbunden ist;
Kommunizieren mit dem Anbietersystem, um eine zusätzliche Antwort zu erhalten (345), die den zusätzlichen Inhalt enthält, der mit dem einen oder den mehreren Posten verbunden ist, wobei die zusätzliche Antwort dadurch erzeugt wird, dass das Anbietersystem mit dem gehosteten Angebotsmanagementsystem kommuniziert, und wobei gilt, dass wenn die Anfrage für eine direkte Auslieferung geeignet ist und das Anbietersystem eine direkte Auslieferung unterstützt, das Anbietersystem direkt über einen direkten Auslieferungskanal kontaktiert wird, um die Anfrage zu bearbeiten, wobei die Bearbeitung der Anfrage das Bereitstellen des zusätzlichen Inhalts umfasst; und
Bereitstellen, vom Vermittlungsserver an die anfragende Vorrichtung, der zusätzlichen Antwort (350) in Reaktion auf die zweite Anfrage.

8. Vermittlungsserver nach Anspruch 7, wobei zum Erzeugen der angepassten Antwort der Prozessor dafür eingerichtet ist, einen oder mehrere der folgenden Punkte anzupassen:
ein Preis für den einen oder die mehreren Posten, die durch die Daten repräsentiert werden; und
Dienste, die mit dem einen oder den mehreren Posten, die durch die Daten repräsentiert werden, verbunden sind.

9. Vermittlungsserver nach Anspruch 7 oder Anspruch 8, wobei zum Erzeugen der Zwischenantwort der Prozessor dafür eingerichtet ist, Daten abzurufen, die Regeln für das Erzeugen eines Grundangebots definieren, das dem einen oder den mehreren Posten zugeordnet ist, wobei die Daten wenigstens eines der folgenden umfassen: (i) Information, die vom Anbietersystem elektronisch veröffentlicht wird, und (ii) Information, die vom Anbietersystem an den Vermittlungsserver bereitgestellt wird.

10. Vermittlungsserver nach einem der Ansprüche 7 bis 9, wobei die vom gehosteten Angebotsmanagementsystem empfangenen Anweisungen Regeln des Anbietersystems repräsentieren, um Information anzupassen, die vom Anbietersystem elektronisch veröffentlicht wird und ein Grundangebot für den einen oder die mehreren Posten repräsentiert, um ein Angebot für den einen oder die mehreren Posten zu erzeugen.

11. Vermittlungsserver nach einem der Ansprüche 7 bis 10, wobei die Anfrage eine Einkaufsanfrage umfasst.

12. Vermittlungsserver nach einem der Ansprüche 7 bis 11, wobei der Prozessor außerdem für Folgendes eingerichtet ist:
Empfangen, von der anfragenden Vorrichtung und nach dem Bereitstellen der angepassten Antwort an die anfragende Vorrichtung, einer zweiten Anfrage für zusätzlichen Inhalt, der mit dem einen oder den mehreren Posten verbunden ist;
Kommunizieren mit dem Anbietersystem, um eine zusätzliche Antwort zu erhalten, die den zusätzlichen Inhalt enthält, der mit dem einen oder den mehreren Posten verbunden ist, wobei die zusätzliche Antwort dadurch erzeugt wird, dass das Anbietersystem mit dem gehosteten Angebotsmanagementsystem kommuniziert; und
Bereitstellen, an die anfragende Vorrichtung, der zusätzlichen Antwort in Reaktion auf die zweite Anfrage.

13. Vermittlungsserver nach einem der Ansprüche 7 bis 12, wobei der Prozessor außerdem für Folgendes eingerichtet ist: Abrufen eines Anbieterprofils und Feststellen, basierend auf dem Anbieterprofil, ob die Anfrage für eine direkte Auslieferung geeignet ist.

14. Computerprogrammprodukt zum Bearbeiten von Datenanfragen in einem Datenverarbeitungssystem, wobei das Programmprodukt Programmcodeanweisungen umfasst, die auf einem computerlesbaren Medium gespeichert sind, Folgendes umfassend:
ein computerlesbares Programmmittel zum Empfangen, von einer anfragenden Vorrichtung und über eine Kommunikationsschnittstelle des Vermittlungsservers, einer Anfrage (305) für einen oder mehrere Posten, die von einem Anbietersystem bereitgestellt werden;
ein computerlesbares Programmmittel zum Erzeugen einer Zwischenantwort, die Daten umfasst, die den einen oder die mehreren Posten repräsentieren, die von dem Anbietersystem bereitgestellt werden;
wobei die Zwischenantwort durch eine Anfragebearbeitungseinheit des Vermittlungsservers erhalten wird, indem Daten entweder von einem gehosteten Angebotsmanagementsystem oder externen Quellen oder von beidem abgerufen werden;
ein computerlesbares Programmmittel zum Feststellen, ob die Anfrage für eine direkte Auslieferung (315) geeignet ist;
ein computerlesbares Programmmittel, zum Erzeugen, in Reaktion auf eine Feststellung, dass die Anfrage für eine direkte Auslieferung geeignet ist, und am Vermittlungsserver, einer angepassten Antwort (320) durch Folgendes:
- Kommunizieren mit dem gehosteten Angebotsmanagementsystem, um Anweisungen zum Anpassen der Zwischenantwort zu empfangen, wobei das gehostete Angebotsmanagementsystem gehostete Anbieterobjektdienste für das Anbietersystem bereitstellt; und
- Anpassen der Zwischenantwort basierend auf den Anweisungen, um eine angepasste Antwort zu erzeugen; und
ein computerlesbares Programmmittel zum Bereitstellen, an die anfragende Vorrichtung und über die Kommunikationsschnittstelle, der angepassten Antwort (325) in Reaktion auf die Anfrage,
wobei das Programmprodukt außerdem Programmcodeanweisungen umfasst, die auf einem computerlesbaren Medium gespeichert sind und die folgendes umfassen:
ein computerlesbares Programmmittel zum Empfangen, von der anfragenden Vorrichtung am Vermittlungsserver und nach dem Bereitstellen der angepassten Antwort an die anfragende Vorrichtung, einer zweiten Anfrage für zusätzlichen Inhalt (330), der mit dem einen oder den mehreren Posten verbunden ist;
ein computerlesbares Programmmittel zum Kommunizieren mit dem Anbietersystem, um eine zusätzliche Antwort zu erhalten (345), die den zusätzlichen Inhalt enthält, der mit dem einen oder den mehreren Posten verbunden ist, wobei die zusätzliche Antwort dadurch erzeugt wird, dass das Anbietersystem mit dem gehosteten Angebotsmanagementsystem kommuniziert, und wobei gilt, dass wenn die Anfrage für eine direkte Auslieferung geeignet ist und das Anbietersystem eine direkte Auslieferung unterstützt, das Anbietersystem direkt über einen direkten Auslieferungskanal kontaktiert wird, um die Anfrage zu bearbeiten, wobei die Bearbeitung der Anfrage das Bereitstellen des zusätzlichen Inhalts umfasst; und
ein computerlesbares Programmmittel zum Bereitstellen, vom Vermittlungsserver an die anfragende Vorrichtung, der zusätzlichen Antwort (350) in Reaktion auf die zweite Anfrage,
wenn das Programm auf einem Computer ausgeführt wird.

## Revendications

1. Méthode de gestion de demandes de données dans un système informatique comprenant :
la réception, au niveau d'un serveur d'intermédiation, depuis un dispositif de demande, d'une demande (305) d'un ou plusieurs éléments fournis par un système de fournisseur ;
la génération, au niveau du serveur d'intermédiation, d'une réponse intermédiaire comprenant des données indicatives des un ou plusieurs éléments fournis par le système de fournisseur,
dans laquelle la réponse intermédiaire est obtenue par un gestionnaire de demande du serveur d'intermédiation par la récupération de données de l'un ou des deux parmi un système de gestion d'offre hébergé et des sources externes ;
la détermination, au niveau du serveur d'intermédiation, si la demande est ou non admissible à une distribution directe (315) ;
en réponse à une détermination que la demande est admissible à une distribution directe,
la génération, au niveau du serveur d'intermédiation, d'une réponse ajustée (320) par :
- la communication avec le système de gestion d'offre hébergé pour recevoir des instructions pour ajuster la réponse intermédiaire, le système de gestion d'offre hébergé fournissant des services d'objet de fournisseur hébergés pour le système de fournisseur ; et
- l'ajustement, au niveau du serveur d'intermédiation, de la réponse intermédiaire sur la base des instructions ; et
la fourniture, depuis le serveur d'intermédiation, au dispositif de demande, de la réponse ajustée (325) en réponse à la demande,
dans laquelle la méthode comprend en outre :
après la fourniture de la réponse ajustée au dispositif de demande, la réception, au niveau du serveur d'intermédiation, depuis le dispositif de demande, d'une deuxième demande de contenu auxiliaire (330) associé aux un ou plusieurs éléments ;
la communication avec le système de fournisseur pour recevoir une réponse auxiliaire (345) contenant le contenu auxiliaire associé aux un ou plusieurs éléments, la réponse auxiliaire étant générée via le système de fournisseur communiquant avec le système de gestion d'offre hébergé, dans laquelle, lorsque la demande est admissible à une distribution directe et le système de fournisseur prend en charge une distribution directe, le système de fournisseur est contacté directement via un canal de distribution directe pour gérer la demande, dans laquelle la gestion de la demande inclut la fourniture du contenu auxiliaire ; et
la fourniture, depuis le serveur d'intermédiation, au dispositif de demande, de la réponse auxiliaire (350) en réponse à la deuxième demande.

2. Méthode selon la revendication 1, dans laquelle la génération de la réponse ajustée par l'ajustement de la réponse intermédiaire sur la base des instructions comprend l'ajustement d'un ou plusieurs parmi :
un prix des un ou plusieurs éléments indiqués par les données ; et
des services associés aux un ou plusieurs éléments indiqués par les données.

3. Méthode selon la revendication 1 ou 2, dans laquelle la génération de la réponse intermédiaire est basée sur des données définissant des règles pour générer une offre de base correspondant aux un ou plusieurs éléments, les données incluant au moins l'une parmi (i) des informations publiées électroniquement par le système de fournisseur et (ii) des informations fournies depuis le système de fournisseur au serveur d'intermédiation.

4. Méthode selon l'une quelconque des revendications 1 à 3, dans laquelle les instructions reçues depuis le système de gestion d'offre hébergé représentent des règles du système de fournisseur pour ajuster des informations, publiées électroniquement par le système de fournisseur qui représentent une offre de base pour les un ou plusieurs éléments, pour générer une offre pour les un ou plusieurs éléments.

5. Méthode selon l'une quelconque des revendications 1 à 4, dans laquelle la demande comprend une demande d'achat.

6. Méthode selon l'une quelconque des revendications 1 à 5, comprenant en outre, au niveau du serveur d'intermédiation : la récupération d'un profil de fournisseur et la détermination si la demande est ou non admissible à une distribution directe sur la base du profil de fournisseur.

7. Serveur d'intermédiation pour gérer des demandes de données dans un système informatique, le serveur d'intermédiation comprenant :
une interface de communication ;
un processeur connecté à l'interface de communication, le processeur étant configuré pour :
recevoir, depuis un dispositif de demande via l'interface de communication, une demande (305) d'un ou plusieurs éléments fournis par un système de fournisseur ;
générer une réponse intermédiaire comprenant des données indicatives des un ou plusieurs éléments fournis par le système de fournisseur ;
dans lequel la réponse intermédiaire est obtenue par un gestionnaire de demande du serveur d'intermédiation par la récupération de données de l'un ou des deux parmi un système de gestion d'offre hébergé et des sources externes,
déterminer si la demande est ou non admissible à une distribution directe (315) ;
en réponse à une détermination que la demande est admissible à une distribution directe, générer, au niveau du serveur d'intermédiation, une réponse ajustée (320) par :
- la communication avec le système de gestion d'offre hébergé pour recevoir des instructions pour ajuster la réponse intermédiaire, le système de gestion d'offre hébergé fournissant des services d'objet de fournisseur hébergés pour le système de fournisseur ; et
- l'ajustement de la réponse intermédiaire sur la base des instructions pour générer une réponse ajustée ; et
fournir au dispositif de demande, via l'interface de communication, la réponse ajustée (325) en réponse à la demande,
dans lequel le processeur est en outre configuré pour :
après la fourniture de la réponse ajustée au dispositif de demande, recevoir, au niveau du serveur d'intermédiation, depuis le dispositif de demande, une deuxième demande de contenu auxiliaire (330) associé aux un ou plusieurs éléments ;
communiquer avec le système de fournisseur pour recevoir une réponse auxiliaire (345) contenant le contenu auxiliaire associé aux un ou plusieurs éléments, la réponse auxiliaire étant générée via le système de fournisseur communiquant avec le système de gestion d'offre hébergé, dans lequel, lorsque la demande est admissible à une distribution directe et le système de fournisseur prend en charge une distribution directe, le système de fournisseur est contacté directement via un canal de distribution directe pour gérer la demande, dans lequel la gestion de la demande inclut la fourniture du contenu auxiliaire ; et
fournir, depuis le serveur d'intermédiation, au dispositif de demande, la réponse auxiliaire (350) en réponse à la deuxième demande.

8. Serveur d'intermédiation selon la revendication 7, dans lequel le processeur est configuré, afin de générer la réponse ajustée, pour ajuster un ou plusieurs parmi :
un prix des un ou plusieurs éléments indiqués par les données ; et
des services associés aux un ou plusieurs éléments indiqués par les données.

9. Serveur d'intermédiation selon la revendication 7 ou 8, dans lequel le processeur est configuré, afin de générer la réponse intermédiaire, pour récupérer des données définissant des règles pour générer une offre de base correspondant aux un ou plusieurs éléments, les données incluant au moins l'une parmi (i) des informations publiées électroniquement par le système de fournisseur et (ii) des informations fournies depuis le système de fournisseur au serveur d'intermédiation.

10. Serveur d'intermédiation selon l'une quelconque des revendications 7 à 9, dans lequel les instructions reçues depuis le système de gestion d'offre hébergé représentent des règles du système de fournisseur pour ajuster des informations, publiées électroniquement par le système de fournisseur qui représentent une offre de base pour les un ou plusieurs éléments, pour générer une offre pour les un ou plusieurs éléments.

11. Serveur d'intermédiation selon l'une quelconque des revendications 7 à 10, dans lequel la demande comprend une demande d'achat.

12. Serveur d'intermédiation selon l'une quelconque des revendications 7 à 11, dans lequel le processeur est en outre configuré pour :
après la fourniture de la réponse ajustée au dispositif de demande, recevoir, depuis le dispositif de demande, une deuxième demande de contenu auxiliaire associé aux un ou plusieurs éléments ;
communiquer avec le système de fournisseur pour recevoir une réponse auxiliaire contenant le contenu auxiliaire associé aux un ou plusieurs éléments, la réponse auxiliaire étant générée via le système de fournisseur communiquant avec le système de gestion d'offre hébergé ; et
fournir, au dispositif de demande, la réponse auxiliaire en réponse à la deuxième demande.

13. Serveur d'intermédiation selon l'une quelconque des revendications 7 à 12, dans lequel le processeur est en outre configuré pour : récupérer un profil de fournisseur et déterminer si la demande est ou non admissible à une distribution directe sur la base du profil de fournisseur.

14. Produit de programme informatique pour la gestion de demandes de données dans un système informatique,
le produit de programme comprenant des instructions de code de programme stockées sur un support lisible par ordinateur comprenant :
des moyens de programme lisibles par ordinateur pour la réception, depuis un dispositif de demande via une interface de communication du serveur intermédiaire, d'une demande (305) d'un ou plusieurs éléments fournis par un système de fournisseur ;
des moyens de programme lisibles par ordinateur pour la génération d'une réponse intermédiaire comprenant des données indicatives des un ou plusieurs éléments fournis par le système de fournisseur,
dans lequel la réponse intermédiaire est obtenue par un gestionnaire de demande du serveur d'intermédiation par la récupération de données de l'un ou des deux parmi un système de gestion d'offre hébergé et des sources externes,
des moyens de programme lisibles par ordinateur pour la détermination si la demande est ou non admissible à une distribution directe (315) ;
des moyens de programme lisibles par ordinateur pour, en réponse à une détermination que la demande est admissible à une distribution directe, la génération, au niveau du serveur d'intermédiation, d'une réponse ajustée (320) par :
- la communication avec un système de gestion d'offre hébergé pour recevoir des instructions pour ajuster la réponse intermédiaire, le système de gestion d'offre hébergé fournissant des services d'objet de fournisseur hébergés pour le système de fournisseur ; et
- l'ajustement de la réponse intermédiaire sur la base des instructions pour générer une réponse ajustée ; et
des moyens de programme lisibles par ordinateur pour la fourniture, au dispositif de demande via l'interface de communication, de la réponse ajustée (325) en réponse à la demande,
dans lequel le produit de programme comprend en outre des instructions de code de programme stockées sur un support lisible par ordinateur comprenant :
des moyens de programme lisibles par ordinateur pour, après la fourniture de la réponse ajustée au dispositif de demande, la réception, au niveau du serveur d'intermédiation, depuis le dispositif de demande, d'une deuxième demande de contenu auxiliaire (330) associé aux un ou plusieurs éléments ;
des moyens de programme lisibles par ordinateur pour la communication avec le système de fournisseur pour recevoir une réponse auxiliaire (345) contenant le contenu auxiliaire associé aux un ou plusieurs éléments, la réponse auxiliaire étant générée via le système de fournisseur communiquant avec le système de gestion d'offre hébergé, dans lequel, lorsque la demande est admissible à une distribution directe et le système de fournisseur prend en charge une distribution directe, le système de fournisseur est contacté directement via un canal de distribution directe pour gérer la demande, dans lequel la gestion de la demande inclut la fourniture du contenu auxiliaire ; et
des moyens de programme lisibles par ordinateur pour la fourniture, depuis le serveur d'intermédiation, au dispositif de demande, de la réponse auxiliaire (350) en réponse à la deuxième demande,
lorsque ledit programme s'exécute sur un ordinateur.
